# EUROPEAN PATENT APPLICATION

(11) **EP 4 592 730 A1**
(43) Date of publication of application: **30.07.2025**
(21) Application number: 25153585.2
(22) Date of filing: 23.01.2025
(51) Int. Cl.: G02B 23/12, G02B 23/18

(54) **PANNING BINOCULAR NIGHT VISION SYSTEM**

(30) Priority: 23.01.2024 NL 2036878
(71) Applicant: LumiWorx SARL, 3895 Foetz (LU)
(72) Inventor: DA COSTA, Joao Daniel Rosa, L-3895 Foetz (LU); COSTA, Daniel Braz, L-3895 Foetz (LU); VON ESSEN, Reimer, L-3895 Foetz (LU)
(74) Representative: V.O.

(57) **Abstract**

The housing assembly of the panning binocular night vision system is configured to facilitate the night-vision monoculars being horizontally rotated outwards, thereby facilitating an expanded horizontal field of view. An example housing assembly comprises a bridge member, a first arm assembly and a second arm assembly rotatably coupled to a first end and a second end, respectively, of the bridge member, and a first pod and a second pod attached to a distal end of the first arm assembly and the second arm assembly, respectively. The first pod and the second pod serve as a housing for a first optical device and a second optical device, respectively. The first arm assembly and the second arm assembly each include a rotational connector, a pod adapter, and a mounting bracket used to pivotally couple the pod adapter to the rotational connector. The pod adapter and the mounting bracket of both the first arm assembly and the second arm assembly are configured to horizontally articulate and thereby facilitate rotating the first pod and the second pod, respectively, between a center-neutral position and a wide-angle position.

## Description

### TECHNICAL FIELD

This disclosure relates generally to a binocular night vision system, and specifically to a housing assembly of the binocular night vision system that provides for an adjustable field of view.

### BACKGROUND

Viewing devices, such as night-vision monoculars, have conventionally been aligned and mounted in pairs. This traditional arrangement produces a single circular image, typically offering a 40-degree field of view (FOV), though some devices have a field of view that is greater than or less than 40-degrees. The dual mounting ensures sharp and perfectly overlapped pupil images, but it does not extend the field of view beyond that of a single device. This limitation, often described as "looking through a tube," limits situational awareness.

### SUMMARY

To address the limited FOV, panoramic night vision goggles have been developed, combining four or more viewing devices arranged in a unique orientation. This configuration includes two centrally aligned devices and two outer devices angled laterally outwards, where the images from the outboard devices overlap with those from the inboard ones. This design achieves an approximate 97-degree FOV, significantly enhancing usability. However, these systems come with their own drawbacks. They are more complex, heavier, and costlier due to the use of four viewing devices. Furthermore, they lack the flexibility for users to move individual devices out of the way for unaided eye viewing, forcing them to either flip up the entire goggle system or peer under it.

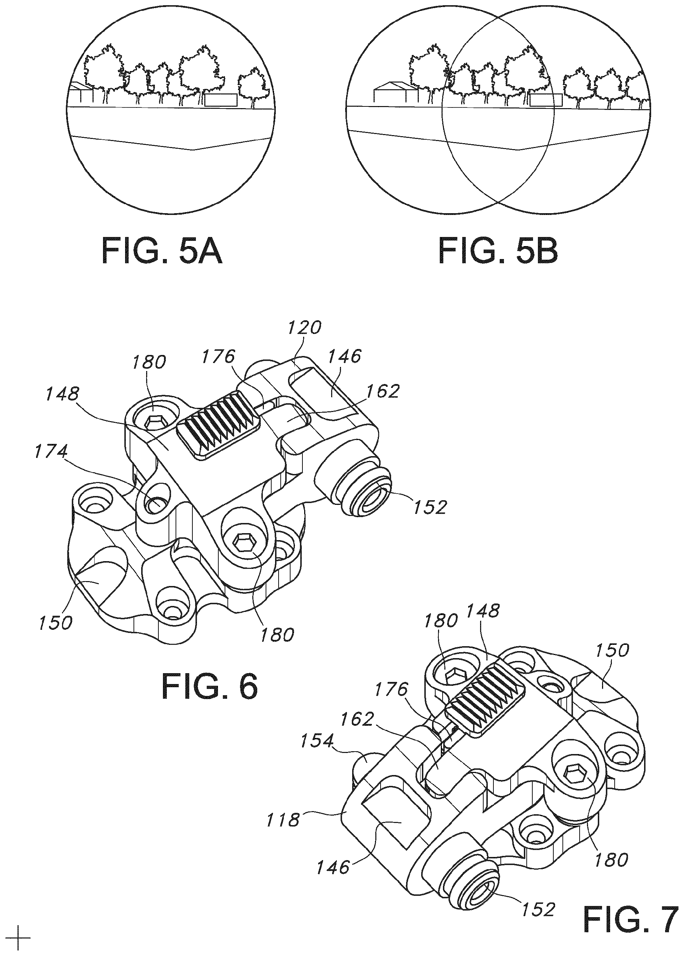

The panning binocular night vision system disclosed herein presents a significant advancement in night vision technology, bridging the gap between the cumbersome, expensive quad-tube systems and the lighter, but limited field of view, binoculars. The panning binocular night vision system, offers cost-effectiveness comparable to prior art binocular devices while providing users with the ability to significantly expand their horizontal field of view on demand. The housing assembly of the panning binocular night vision system allows users to choose between a fully overlapping field of view, as shown in FIG. 5A, for enhanced depth perception in challenging terrains and an expanded horizontal field of view, as shown in FIG. 5B, for greater situational awareness. This flexibility is achieved with minimal added weight, making it a versatile and user-friendly solution in the realm of night vision technology.

Accordingly, needs exist for the panning binocular night vision system disclosed herein. It is to the provision of a housing assembly for a panning binocular night vision system, configured to address these and other needs that the present disclosure is primarily directed.

It is to be understood that this summary is not an extensive overview of the disclosure. This summary is exemplary and not restrictive, and it is intended neither to identify key or critical elements of the disclosure nor delineate the scope thereof. The sole purpose of this summary is to explain and exemplify certain concepts of the disclosure as an introduction to the following complete and extensive detailed description.

Disclosed is a panning binocular night vision system comprising a pair of independently pivoting night-vision monoculars connected to a bridge member. Each night-vision monocular is attached to the bridge member by an arm assembly comprises a pod containing an image intensifier tub and other optical components that permit vision during low-light conditions by converting incoming visible and infrared light from a viewed scene to an intensified visible light image. Each arm assembly allows the attached night-vision monocular to horizontally rotate, or pan, between a center-neutral position and a wide-angle position. When in the center-neutral position, the night-vision monocular is oriented straight forward; when in the wide-angle position, the night-vision monocular is angled outward to provide for an expanded horizontal field of view. Each arm assembly also allows the attached night-vision monocular to move through a vertical travel path, between a stowed position and a deployed position. When in the stowed position, the night-vision monocular is out of the user's field of view; when in the deployed position, the night-vision monocular is positioned in front of an eye.

The housing assembly of the panning binocular night vision system is configured to facilitate the night-vision monoculars being horizontally rotated outwards, thereby facilitating an expanded horizontal field of view.

An example housing assembly comprises a bridge member, a first arm assembly rotatably coupled to a first end of the bridge member, a first pod attached to a distal end of the first arm assembly, a second arm assembly rotatably coupled to a second end of the bridge member, and a second pod attached to a distal end of the second arm assembly. The first pod and the second pod serve as a housing for a first optical device and a second optical device, respectively. The first arm assembly includes a rotational connector, a pod adapter, and a mounting bracket used to pivotally couple the pod adapter to the rotational connector; the second arm assembly also includes a rotational connector, a pod adapter, and a mounting bracket used to pivotally couple the pod adapter to the rotational connector. The pod adapter and the mounting bracket of the first arm assembly are configured to horizontally articulate and thereby facilitate rotating the first pod between a center-neutral position and a wide-angle position; the pod adapter and the mounting bracket of the second arm assembly are also configured to horizontally articulate and thereby facilitate rotating the second pod between a central-neutral position and a wide-angle position.

### BRIEF DESCRIPTION OF THE DRAWINGS

FIG. 1 is an isometric view of a panning binocular night vision system according to the principles of the present disclosure.
FIG. 2 is a top plan view of the panning binocular night vision system shown in FIG. 1. In this view, the pods of the housing assembly are oriented straight forward.
FIG. 3 is another top plan view of the panning binocular night vision system shown in FIG. 1. In this view, the pods of the housing assembly are angled outward.
FIG. 4 is a rear elevational view of the panning binocular night vision system shown in FIG. 1. In this view, the left pod is in a deployed position and the right pod is in a stowed position.
FIG. 5A illustrates the field of view generated by the panning binocular night vision system when both pods are in the forward position, as is shown in FIG. 2.
FIG. 5B illustrates the increased field of view generated by the panning binocular night vision system when both pods are angled outward, as is shown in FIG. 3.
FIG. 6 is an isometric view of the right arm assembly of the panning binocular night vision system shown in FIG. 1.
FIG. 7 is an isometric view of the left arm assembly of the panning binocular night vision system shown in FIG. 1.
FIGs. 8 and 9 are detailed views of the right arm assembly shown in FIG. 2. In these views, the pod attached to the right arm assembly is in the forward position.
FIGs. 10-12 are detailed views of the right arm assembly shown in FIG. 3. In these views, the pod attached to the right arm assembly is angled outward. In FIGs. 11 and 12, the spring-loaded locking pin is positioned in a gap formed between the tab of the mounting bracket and a sidewall of the limiting slot to fix the pod in position.

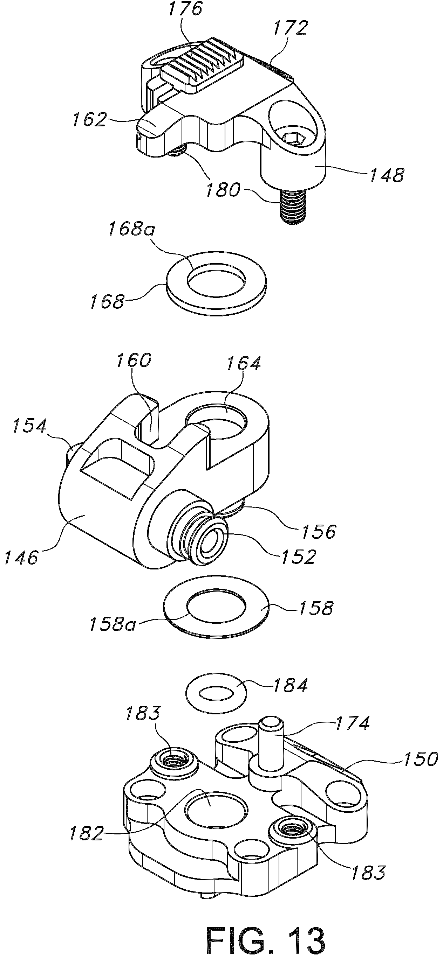

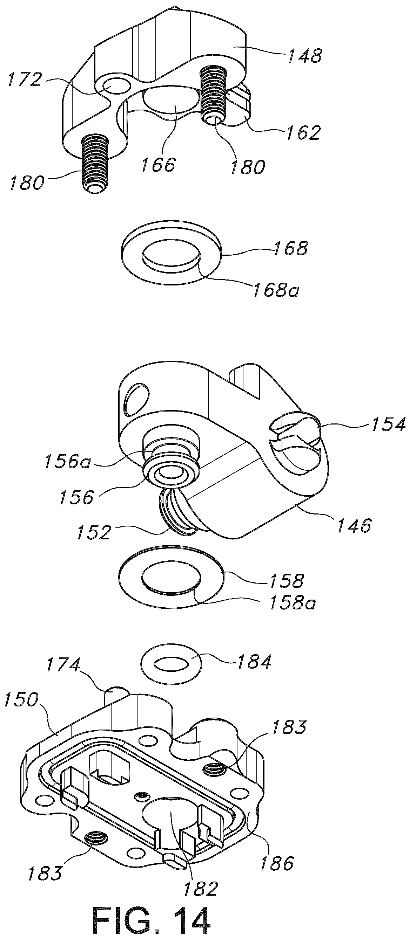

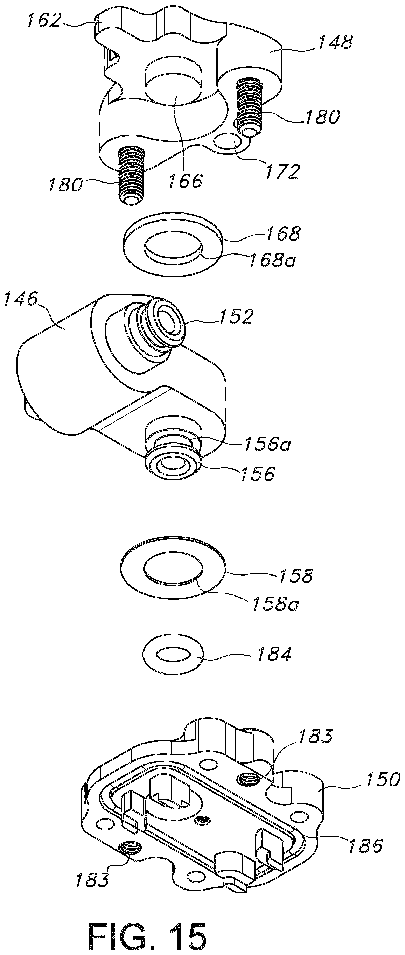

FIGs. 13-15 are exploded isometric views of the right arm assembly shown in FIG. 6.
FIG. 16 is an isometric view of a front flange bearing.
FIG. 17 is an isometric view of a rear flange bearing.

Like reference numerals refer to corresponding parts throughout the several views of the drawings.

### DETAILED DESCRIPTION

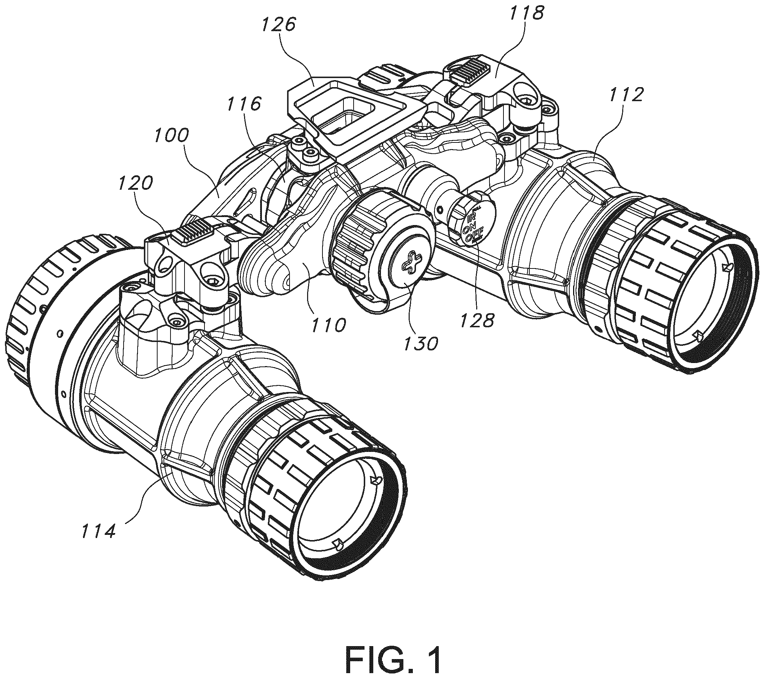

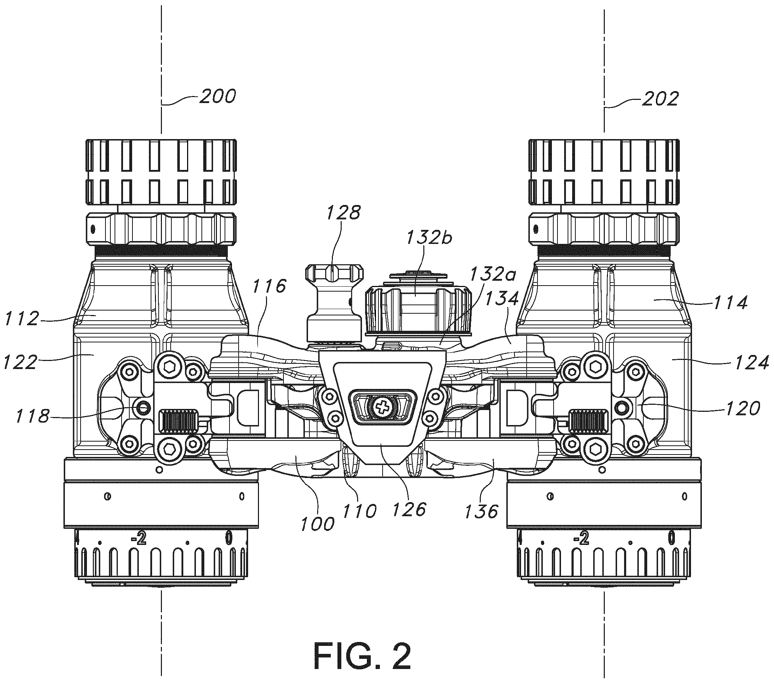

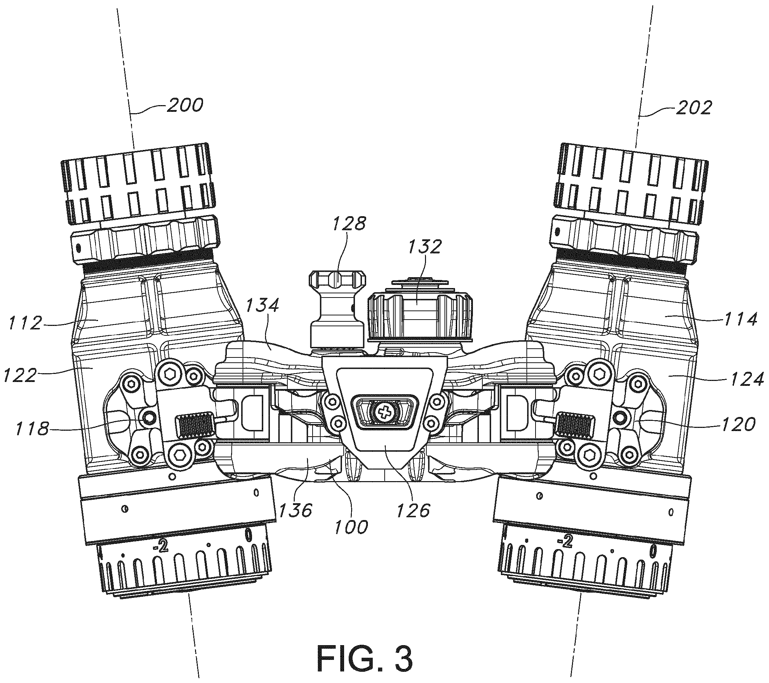

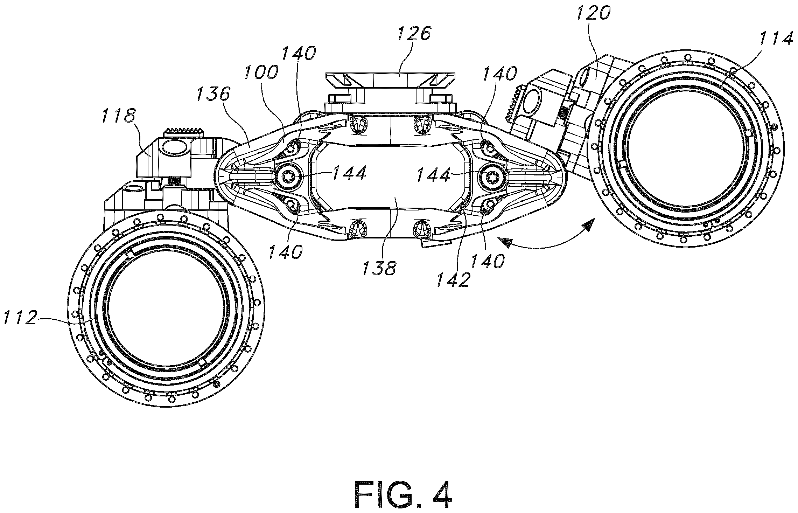

FIGs. 1-4 illustrate a panning binocular night vision system 100 according to the principles of the present disclosure. The panning binocular night vision system 100 comprises a pair of independently pivoting night-vision monoculars 112, 114 connected to a bridge member 116. Each night-vision monocular 112, 114 is attached to the bridge member 116 by an arm assembly 118, 120 and comprises a pod 122, 124 containing an image intensifier tub and other optical components that permit vision during low-light conditions by converting incoming visible and infrared light from a viewed scene to an intensified visible light image. Each arm assembly 118, 120 allows the attached night-vision monocular 112, 114 to horizontally rotate, or pan, between a center-neutral position and a wide-angle position. When in the center-neutral position, the night-vision monocular 112, 114 is oriented straight forward (see, e.g., FIG. 2); when in the wide-angle position, the night-vision monocular 112, 114 is angled outward (see, e.g., FIG. 3). Each arm assembly 118, 120 also allows the attached night-vision monocular 112, 114 to move through a vertical travel path, between a stowed position and a deployed position (see, e.g., FIG. 4). When in the stowed position, the night-vision monocular 112, 114 is out of the user's field of view; when in the deployed position, the night-vision monocular 112, 114 is positioned in front of an eye. The bridge member 116 includes an interface shoe 126 used to attach the panning binocular night vision system 100 to a compatible helmet mount, such as the Wilcox G24 mount.

FIG. 2 shows a top plan view of the panning binocular night vision system 100, with the optical axis 200 of the left night-vision monocular 112 and the optical axis 202 of the right night-vision monocular 114 parallel to one another.

FIG. 3 shows a top plan view of the panning binocular night vision system 100, with the optical axis 200 of the left night-vision monocular 112 and the optical axis 202 of the right night vision monocular 114 angled outward.

FIG. 5A show the combined field of view provided by the pair of night vision monoculars 112, 114 when in the center-neutral position. In the example implementation, the user is provided with a 40-degree circular field of view.

FIG. 5B illustrates the combined field of view provided by the pair of night vision monoculars 112, 114 when in the wide-angle position. In the example implementation, the user is provided with a 54-degree horizontal field of view made up of two overlapping circular fields of view. This increased horizontal field of view results from each pod 122, 124 being independently rotated 7 degrees outward from the center-neutral position.

As shown in FIGs. 1-4, the housing assembly 110 of the panning binocular night vision system 100 comprises the bridge member 116, the arm assemblies 118, 1120, and the pod 122, 124 of each night-vision monocular 112, 114. The housing assembly 110 includes a power switch 128 and an infrared illuminator (not shown). The housing assembly 110 holds a power source (e.g., a battery) in a battery compartment 130, and the power supply circuitry (not shown) needed to operate the infrared illuminator, the image intensifier tube of each night-vision monocular 112, 114, and any other electrical components described herein.

As shown in FIGs. 1-4, the bridge member 116 of the housing assembly 110 comprises a front plate 134, a back plate 136, and a middle housing 138 captured between them. The middle housing 138 defines an interior compartment (not shown) and is secured to a back side of the front plate 134 by threaded fasteners 140. The back plate 136 includes an aperture 142 configured to receive, and support, a rear portion of the middle housing 138. The back plate 136 is secured to the back side of the front plate 134 by threaded fasteners 144, thereby capturing the middle housing 138 between the front plate 134 and the back plate 136.

Each arm assembly 118, 120 of the housing assembly 110 has a proximal end rotatably captured between the front plate 134 and back plate 136 of the bridge member 110, and a distal end adapted for attachment to the pod 122, 124 of a night-vision monocular 112, 114. The threaded fasteners 144, used to attach the front plate 134 to the back plate 136 of the housing assembly 110, are used to adjust (i.e., increase or decrease) the tension placed by the bridge member 116 on the proximal end of each arm assembly 118, 120.

Each arm assembly 118, 120 comprises a rotational connector 146, a mounting bracket 148, and a pod adapter 150. The mounting bracket 148 is used to pivotally couple the pod adapter 150 to the rotational connector 146. This arrangement allows the arm assembly 118, 120 to horizontally articulate and the attached pod 122, 124 to move between the neutral-center position, shown in FIG. 2, and the wide-angle position, shown in FIG. 3. The rotational connector 146 is configured to facilitate vertical rotation of the arm assembly 118, 120 and thereby the attached pod 122, 124.

The rotational connector 146 of each arm assembly 118, 120 includes two parallel pivots 152, 154, each aligned in a horizontal orientation. These two pivots, also referred to as the front pivot 152 and rear pivot 154, are positioned on opposite sides of a central axis, with their respective ends oriented away from each other. These two pivots 152, 154 are positioned perpendicular to another pivot 156 that depends from the underside of the rotational connector 146. The rotational connector 146 also includes a limiting slot 160 configured to receive therein the tab 162 of the mounting bracket 148 and to limit the tab's 162 rotational movement. More specifically, the limiting slot 160 includes two opposing sidewalls that define a rotational range of motion for the tab 162. In the preferred implementation, this rotational range of motion allows the attached pod 122, 124 to horizontally rotate 7° degrees outward (see, e.g., FIG. 3). However, in other implementations, the limiting slot 160 and tab 162 may be configured to provide for a rotational range of motion that is less than or greater than 7° degrees, up to and including 15° degrees. A bore 164 configured to receive a pivot pin 166 depending from an underside of the mounting bracket 148 is disposed on a top side of the rotational connector 146, near the limiting slot 160.

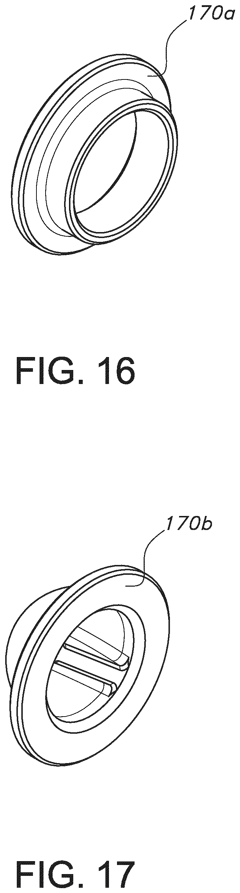

A flange bearing 170a, 170b, fabricated of fiber reinforced plastic, is fitted on both the front pivot 152 and the rear pivot 154 of each rotational connector 146. Each flange bearing 170a, 170b is rotatably positioned within a circular opening in either the front plate 134 or the back plate 136 of the housing assembly 110. The front flange bearing 170a includes a central opening configured to receive therein the front pivot 152 of a rotational connector 146 (see, e.g., FIG. 16); the rear flange bearing 170b includes a crossbeam extending across a central opening configured to receive therein the rear pivot 154 of the rotational connector 146 (see, e.g., FIG. 17). The rear pivot 154 of each rotational connector 146 is a bifurcated structure, including two lobes separated by a gap configured to receive therein the crossbeam of the rear flange bearing 170b. In this way, rotation of the rear flange bearing 170b is tied to the rotation of the arm assembly 118, 120.

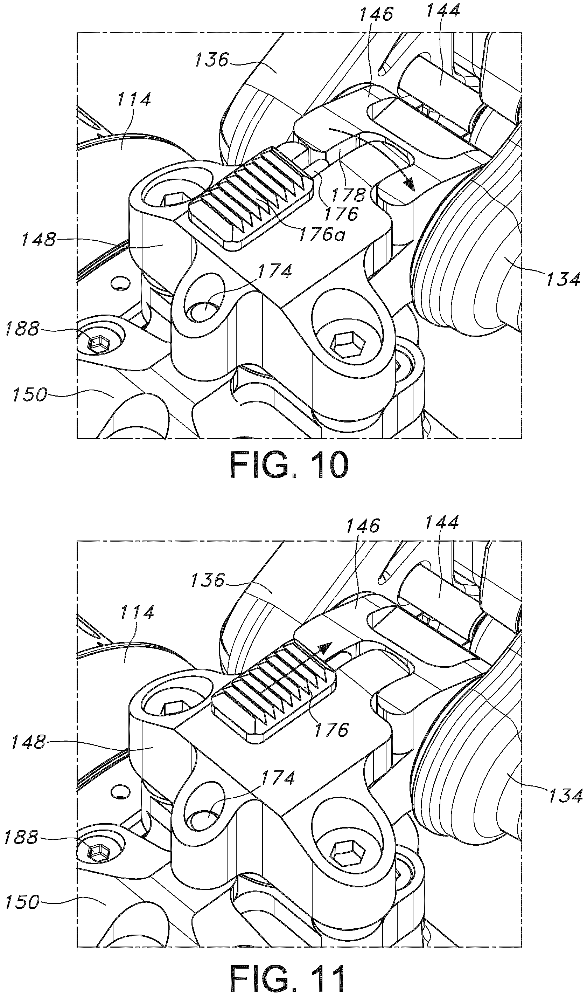

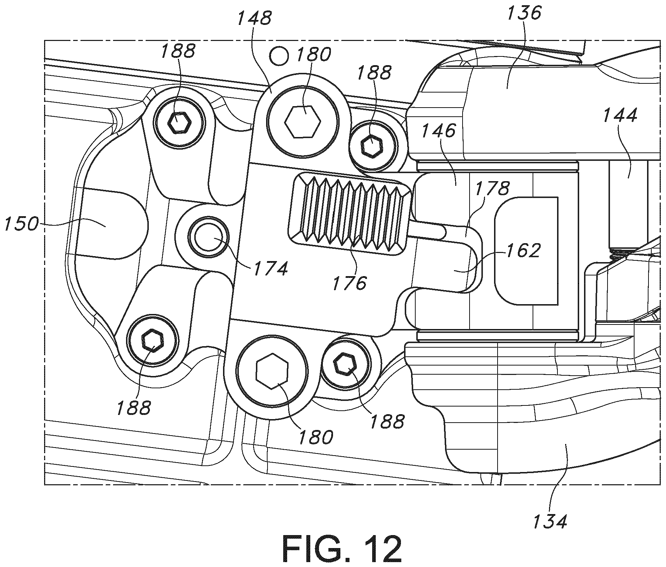

The mounting bracket 148 includes the pivot pin 166 configured to be received within the bore 164 disposed on the top side of the underlying rotational connector 146. A tab 162 extends from a lateral side of the mounting bracket 148. The tab 162 is configured (e.g., shaped) to be received within the limiting slot 160 of the rotational connector 146. The mounting bracket 148 includes a through bore 172, a vertically oriented cylindrical opening located on the lateral side opposite the tab 162. The through bore 172 is configured to receive a locating pin 174 extending from the attached pod adapter 150. The mounting bracket 148 also include a spring-loaded locking pin 176 configured to lock the attached pod 122, 124 in the wide-angle position (see, e.g., FIG. 3). The spring-loaded locking pin 176 is slidably disposed in a guide slot that contains a spring which biases against the locking pin 176. A portion of the spring-loaded locking pin 176 is configured to extend into a gap 178 formed between the tab 162 and a sidewall of the limiting slot 160 when the attached pod 122, 124 is rotated to the wide-angle position (see, e.g., FIGs. 11 and 12). In this way, the arm assembly 118, 120 and thereby the attached pod 122, 124 is prevented from rotating. The spring-loaded locking pin 176 can be withdrawn from the gap 178 between the tab 162 and the sidewall of the limiting slot 160 via use of the thumb pad 176a. A pair of threaded fasteners 180 are used to secure the mounting bracket 148 to the pod adapter 150. Each fastener 180 extends through an opening in the mounting bracket 148 that is aligned with a threaded opening 183 in the underlying pod adapter 150.

A glide washer 168 with a central opening 168a through which the pivot pin 166 extends is positioned between the mounting bracket 148 and the rotational connector 146. The glide washer 168 is configured to facilitate smooth rotational movement while ensuring that the mounting bracket 148 and the rotational connector 146 remain separated. In some implementations, the glide washer 168 is also configured to create additional resistance against unintentional rotational movement.

The pod adapter 150 includes a bore 182 configured to receive the vertically oriented pivot 156 of the rotational connector 146. The bore 182 is disposed on a top side of the pod adapter 150 and extends therethrough. An O-ring 184 positioned within a groove 156a on the vertically oriented pivot 156 of the rotational connector 146 seals the bore 182 and thereby prevents water from entering the pod 122, 124 through the cylindrical opening defined by the bore 182. The locating pin 174, described above, extends from the top side of the pod adapter 150, near the bore 182. The locating pin 174 may be an elongate cylindrical protrusion. The underside of the pod adapter 150 is configured for attachment to the pod 122, 124 of a night-vision monocular 112, 114.

A glide washer 158, with a central opening 158a through which the vertically oriented pivot 156 extends, is positioned between the rotational connector 146 and the attached pod adaptor 150. The glide washer 158 is configured to facilitate smooth rotational movement while ensuring that the rotational connector 146 and the pod adapter 150 remain separated. In some implementations, the glide washer 158 is also configured to create additional resistance against unintentional rotational movement.

Each pod 122, 124 of the housing assembly 110 includes an attachment interface 186 to which the distal end of an arm assembly 118, 120 is attached using fasteners, such as threaded fasteners 188. The attachment interface 186 extends from a top side of the pod 122, 124.

The battery compartment 130 of the housing assembly comprises a battery receptacle 132a and a cap 132b. The battery compartment 132a is configured to receive a battery such as, for example, a CR123A that supplies power to both night-vision monoculars 112, 114. The cap 132b is configured to screw onto the receptacle 132a to enclose one or more batterie therein.

The bridge member 116 and the pod 122, 124 of each night-vision monocular 112, 114 are made of injection-molded carbon fiber reinforced nylon 66 (e.g., 20% carbon fiber reinforced PA 66). The rotational connector 146, mounting bracket 148, and pod adapter 150 of each arm assembly 118, 120 are made of an aluminum alloy, such as 7075-T6. These material choices result in a lightweight housing assembly 110, without compromising durability or ruggedness. In fact, the housing assembly 110 exceeds MIL-STD-810G test protocols for drop and impact by a factor of two. Additionally, the battery compartment 130 is fabricated from electrically inert polyethylene plastic (PEP). This choice of material enables the use of electrically conductive materials, such as carbon fiber reinforced nylon 66, in the rest of the housing assembly 110.

Although not shown in the drawings, it will be understood that suitable wiring, traces, or a combination thereof, connect the electrical components (e.g., the power switch 128, power source, image intensifier tubes, etc.) of the panning binocular night vision system 100 disclosed herein.

While the example housing assembly 100 has a night-vision monocular 112, 114 attached to each arm assembly 118, 120, it is important to note that the housing assembly 110 is not limited to use with night-vision monoculars. As an example, either of the pods 122, 124 could be configured to house another type of viewing device, such as a thermographic camera.

As discussed above, each pod 122, 124 of the housing assembly 110 is configured to horizontally rotate between two positions, a center-neutral position (see FIG. 5A) and a wide-angle position (see FIG. 5B). The following steps may be used to rotate each pod 122, 124 between these two positions.

When the pods 122, 124 are parallel to one another, as shown in FIG. 2, the user can rotate a pod 122, 124 horizontally outward until the tab 162 on the mounting bracket 148 touches a sidewall of the limiting slot 160, as shown in FIG. 10. This creates a gap 178 between the tab 162 and the opposing sidewall of the limiting slot 160 into which a portion of the spring-loaded locking pin 176 extends, as shown in FIG. 11, to lock the pod 122, 124 in the wide-angle position, as shown in FIG. 3.

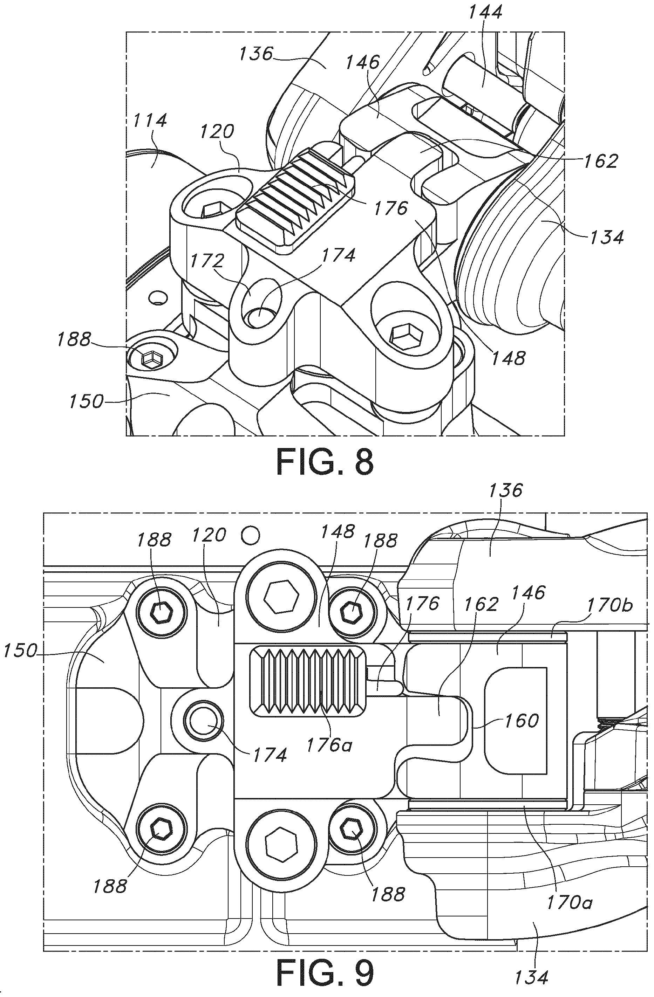

When the pods 122, 124 are angled outward, as shown in FIG. 3, the user must disengage the spring-loaded locking pin 176 from the gap 178 between the tab 162 of the mounting bracket 148 and the sidewall of the limiting slot. 160. This can be achieved by using the thumb pad 176a to withdraw the spring-loading locking pin 176 from the gap 178. The user can then rotate the pod 122, 124 horizontally inward until the tab 162 on the mounting bracket 148 touches the opposing sidewall of the limiting slot 160, as shown in FIG. 9, to place the pod 122, 124 in the center-neutral position, as shown in FIG. 2.

The foregoing description is intended to be illustrative; it is not intended to be exhaustive or to limit the claims to the precise forms disclosed. Those skilled in the relevant art can appreciate that many modifications and variations are possible in light of the foregoing description and associated drawings.

Reference throughout this specification to an "embodiment" or "implementation" or words of similar import means that a particular described feature, structure, or characteristic is included in at least one embodiment of the present disclose. Thus, the phrase "in some implementations" or a phrase of similar import in various places throughout this specification does not necessarily refer to the same embodiment.

The described features, structures, or characteristics may be combined in any suitable manner in one or more embodiments. In the above description, numerous specific details are provided for a thorough understanding of embodiments. One skilled in the relevant art will recognize, however, that embodiments can be practiced without one or more of the specific details, or with other methods, components, materials, etc. In other instances, well-known structures, materials, or operations may not be shown or described in detail.

While operations are depicted in the drawings in a particular order, this should not be understood as requiring that such operations be performed in the particular order shown or in sequential order, or that all illustrated operations be performed, to achieve desirable results.

## Claims

1. A housing assembly for a binocular night vision system, the housing assembly comprising:
a bridge member;
a first arm assembly rotatably coupled to a first end of the bridge member, the first arm assembly comprising a rotational connector, a pod adapter, and a mounting bracket used to pivotally couple the pod adapter to the rotational connector;
a first pod attached to a distal end of the first arm assembly, the first pod is a housing for a first optical device;
a second arm assembly rotatably coupled to a second end of the bridge member; and
a second pod attached to a distal end of the second arm assembly, the second pod is a housing for a second optical device;
wherein:
the pod adapter and the mounting bracket of the first arm assembly are configured to horizontally articulate and thereby facilitate rotating the first pod between a center-neutral position and a wide-angle position; and
the pod adapter and the mounting bracket of the second arm assembly are configured to horizontally articulate and thereby facilitate rotating the second pod between a central-neutral position and a wide-angle position.

2. The housing assembly of claim 1, wherein the wide-angle position of both the first pod and the second pod provides for an expanded horizontal field of view.

3. The housing assembly of claim 1, wherein:
the rotational connector of the first arm assembly includes a bore in a top side of the rotational connector and a vertically oriented pivot that depends from an underside of the rotational connector, the mounting bracket of the first arm assembly includes a through bore on a lateral side of the mounting bracket and a pivot pin configured to be received within the bore disposed on the top side of the rotational connector, the pod adapter of the first arm assembly includes a bore in a top side of the pod adapter and a locating pin that extends from the top side of the pod adapter, the bore in the pod adapter is configured to receive therein the vertically oriented pivot of the rotational connector and the locating pin of the pod adapter is configured to be received within the through bore on the lateral side of the mounting bracket; and
the rotational connector of the second arm assembly includes a bore in a top side of the rotational connector and a vertically oriented pivot that depends from an underside of the rotational connector, the mounting bracket of the second arm assembly includes a through bore on a lateral side of the mounting bracket and a pivot pin configured to be received within the bore disposed on the top side of the rotational connector, the pod adapter of the second arm assembly includes a bore in a top side of the pod adapter and a locating pin that extends from the top side of the pod adapter, the bore in the pod adapter is configured to receive therein the vertically oriented pivot of the rotational connector and the locating pin of the pod adapter is configured to be received within the through bore on the lateral side of the mounting bracket.

4. The housing assembly of claim 3, wherein the first arm assembly includes a spring-loaded locking pin configured to fix the first pod in the wide-angle position and the second arm assembly includes a spring-loaded locking pin configured to fix the second pod in the wide-angle position.

5. The housing assembly of claim 3, wherein:
the mounting bracket of the first arm assembly includes a tab disposed on a lateral side opposite the through bore, the rotational connector of the first arm assembly includes a limiting slot configured to receive therein the tab extending from the mounting bracket, the limiting slot defines a rotational range of motion for the tab and thereby the first pod attached to the first arm assembly; and
the mounting bracket of the second arm assembly includes a tab disposed on a lateral side opposite the through bore, the rotational connector of the second arm assembly includes a limiting slot configured to receive therein the tab extending from the mounting bracket, the limiting slot defines a rotational range of motion for the tab and thereby the second pod attached to the second arm assembly.

6. The housing assembly of claim 5, wherein rotational range of motion for the tab on the mounting bracket of the first arm assembly is at least 7 degrees and the rotational range of motion for the tab on the mounting bracket of the second arm assembly is at least 7 degrees.
